# EUROPEAN PATENT APPLICATION

(11) **EP 4 832 097 A1**
(43) Date of publication of application: **28.10.2026**
(21) Application number: 26174334.8
(22) Date of filing: 23.04.2026
(51) Int. Cl.: H01M 4/36, H01M 4/62, H01M 4/131, H01M 4/525, H01M 10/0525, H01M 10/0562, H01M 4/02

(54) **POSITIVE ELECTRODE ACTIVE MATERIALS, POSITIVE ELECTRODES HAVING POSITIVE ELECTRODE ACTIVE MATERIALS, AND RECHARGEABLE LITHIUM BATTERIES INCLUDING POSITIVE ELECTRODES HAVING POSITIVE ELECTRODE ACTIVE MATERIALS**

(30) Priority: 24.04.2025 KR 20250053792; 14.04.2026 KR 20260067445
(71) Applicant: SAMSUNG SDI CO., LTD., Yongin-si, Gyeonggi-do 17084 (KR)
(72) Inventor: KIM, Jinyoung, 17084 Yongin-si (KR); HWANG, Hoseong, 17084 Yongin-si (KR); KIM, Teayeop, 17084 Yongin-si (KR); JI, Seorin, 17084 Yongin-si (KR); LEE, Jongjin, 17084 Yongin-si (KR)
(74) Representative: Maiwald GmbH

(57) **Abstract**

A positive electrode active material according to some embodiments of the present disclosure may include a core, in a form of secondary particles, and a coating portion. The secondary particles may include a lithium nickel-based composite oxide and a plurality of primary particles that may be agglomerated. The coating portion including a graphene having a layered structure disposed on a surface of the core and a lithium ion conductive solid electrolyte.

## Description

### BACKGROUND

### 1. Field

The present disclosure relates to positive electrode active materials, positive electrodes having the positive electrode active materials, and rechargeable lithium batteries including the positive electrodes having the positive electrode active materials.

### 2. Description of the Related Art

A portable information device (such as a cell phone, a laptop, or a smart phone) or an electric vehicle has used a rechargeable lithium battery having high energy density as a driving power source. Recently, research has been actively conducted to use a rechargeable lithium battery with high energy density as a driving power source for hybrid or electric vehicles or as a power storage source.

Various positive electrode active materials have been investigated for the above-described aims. Among them, lithium nickel-based composite oxides (e.g., lithium nickel manganese cobalt oxide or lithium nickel cobalt aluminum oxide), lithium cobalt oxide, and lithium iron phosphate-based compounds are used as positive electrode active materials. Among these, high nickel-based positive electrode active materials with an amount of nickel of approximately 80 mol% or more can realize high energy density. However, there is a limit to increasing the nickel content, which may create a deterioration of a cycle-life of the battery due to various problems such as structural deterioration from charging and discharging, surface side reactions with the electrolyte, and deterioration due to particle cracks.

Accordingly, attempts are being made to coat the surface of the positive electrode active material with carbon-based materials for structural stability, but coating the positive electrode active material with carbon-based materials causes problems such as deterioration of ionic conductivity and cycle-life characteristics. Accordingly, it is advantageous to develop a coating technology that can stabilize the structure of the positive electrode active material without deteriorating the ionic conductivity and the cycle-life characteristics.

### SUMMARY

Provided is a positive electrode active material having improved structural stability, a suppressed increase in powder resistance, and improved ionic conductivity.

By including the aforementioned positive electrode active material, it is possible to create a positive electrode having improved high-temperature cycle-life characteristics and/or a rechargeable lithium battery having improved high-temperature cycle-life characteristics.

A positive electrode active material according to some embodiments of the present disclosure may include a core, in a form of secondary particles, and a coating portion. The secondary particles may include a lithium nickel-based composite oxide and a plurality of primary particles that may be agglomerated. The coating portion disposed on a surface of the core may include a graphene having a layered structure and a lithium ion conductive solid electrolyte.

In some embodiments, the layered structure may include from 2 layers to 50 layers.

In some embodiments, the graphene of the coating portion may be derived from graphite particulates having an average size of less than or equal to about 2.5 µm.

In some embodiments, the graphite particulates may have a ratio I_{D}/I_{G}, which may be a peak intensity I_{D} at about 1350 cm⁻¹ to a peak intensity I_{G} at about 1580 cm⁻¹ in a Raman spectrum, ranging from about 0.15 to about 0.50.

In some embodiments, the lithium ion conductive solid electrolyte may be represented by:

Li₁₊ₓ₁Rₓ₁M₂₋ₓ₁(PO₄)_{3.}

R may be a metal of Al, B, Sn, Ge, or a combination thereof. M may be Ti, Zr, Hf, or a combination thereof. 0≤x1<2.

In some embodiments, the lithium ion conductive solid electrolyte may be in a form of particles. An average particle diameter D₅₀ of the particles of the lithium ion conductive solid electrolyte may be from about 1 nm to about 1 µm, such as 1 nm to 500 nm.

In some embodiments, the positive electrode active material may include the graphene in an amount from about 0.01 wt% to about 5 wt% based on a total weight of the positive electrode active material.

In some embodiments, the positive electrode active material may include the lithium ion conductive solid electrolyte in an amount from about 0.05 wt% to about 6 wt% based on a total weight of the positive electrode active material.

In some embodiments, a thickness of the coating portion may be from about 1 nm to about 500 nm.

In some embodiments, the coating portion may include a first coating portion including the graphene and a second coating portion including the lithium ion conductive solid electrolyte. The first coating portion may be in a form of a coating layer that continuously surrounds the surface of the core. The second coating portion may have an island geometry that may be discontinuous on the surface of the core, e.g. that may only partially cover the surface.

In some embodiments, the positive electrode active material may further include a grain boundary coating portion on surfaces of primary particles, the grain boundary coating portion including the lithium ion conductive solid electrolyte.

In some embodiments, the lithium nickel-based composite oxide may be represented by:

Liₐ₃Niₓ₃M³_{y3}M⁴_{z3}O_{2-b3}X_{b3}.

0.9≤a3≤1.2, 0.8≤x3<1, 0<y3≤0.2, 0≤z3≤0.2, 0.9≤x3+y3+z3≤1.1, and 0≤b3≤0.1. M³ and M⁴ may be each independently, Al, B, Ba, Ca, Ce, Co, Cr, Cu, Fe, Mg, Mn, Mo, Nb, Si, Sn, Sr, Ti, V, W, Y, Zn, Zr, or a combination thereof. X may be F, P, S, or a combination thereof.

In some embodiments, the lithium nickel-based composite oxide may include an amount of nickel that may be greater than or equal to about 80 mol% based on 100 mol% of a total metal in the lithium nickel-based composite oxide, excluding lithium.

In some embodiments, an average particle diameter D₅₀ of the core may be from about 8 µm to about 20 µm.

In some embodiments, a powder resistance of the positive electrode active material may be in range of greater than about 85 Ω·cm and less than about 150 Ω·cm.

A positive electrode according to some embodiments of the present disclosure may include a positive electrode current collector and a positive electrode active material layer on the positive electrode current collector and including the positive electrode active material as described above.

In some embodiments, an interfacial resistance of the positive electrode may be in range of greater than or equal to about 50 Ω and less than about 150 Ω.

A rechargeable lithium battery according to some embodiments of the present disclosure may include the positive electrode comprising a positive electrode current collector, a positive electrode active material layer on the positive electrode current collector , a negative electrode, and an electrolyte. The positive electrode active material is as described above.

According to some embodiments, the positive electrode active material includes a coating portion including both a carbon-based material and a lithium ion conductive solid electrolyte, thereby improving structural stability, suppressing an increase in powder resistance, and simultaneously improving ionic conductivity.

According to some embodiments, a positive electrode and a rechargeable lithium battery can have improved high-temperature cycle-life characteristics by including the aforementioned positive electrode active material.

### BRIEF DESCRIPTION OF THE DRAWINGS

FIGS. 1 to 4 are schematic views each showing a rechargeable lithium battery according to some embodiments of the present disclosure.
FIG. 5 is a scanning electron microscope photograph of the surface of the positive electrode active material prepared in Example 2 according to some embodiments of the present disclosure.
FIG. 6 is a scanning electron microscope photograph of the surface of the positive electrode active material prepared in Comparative Example 1 according to some embodiments of the present disclosure.
FIG. 7 is a scanning electron microscope photograph of the surface of the positive electrode active material prepared in Comparative Example 2 according to some embodiments of the present disclosure.
FIG. 8 is a scanning electron microscope photograph of the surface of the positive electrode active material prepared in Comparative Example 3 according to some embodiments of the present disclosure.
FIG. 9 is a scanning electron microscope photograph of the surface of the positive electrode active material prepared in Comparative Example 4 according to some embodiments of the present disclosure.
FIGS. 10 and 11 show the results of SEM-EDS analysis on the surface of the positive electrode active material manufactured in Example 2 according to some embodiments of the present disclosure.
FIG. 12 is a photograph of a cross-section of the positive electrode active material prepared in Example 1 taken using a transmission electron microscope according to some embodiments of the present disclosure.
FIG. 13 is a photograph of a cross-section of the positive electrode active material prepared in Example 2 taken using a transmission electron microscope according to some embodiments of the present disclosure.
FIG. 14 is a photograph of a cross-section of the positive electrode active material prepared in Comparative Example 1 taken using a transmission electron microscope according to some embodiments of the present disclosure.
FIG. 15 is a photograph of a cross-section of the positive electrode active material prepared in Comparative Example 3 taken using a transmission electron microscope according to some embodiments of the present disclosure.
FIG. 16 is a photograph of a cross-section of the positive electrode active material prepared in Comparative Example 4 taken using a transmission electron microscope according to some embodiments of the present disclosure.

### DETAILED DESCRIPTION

Hereinafter, specific embodiments will be described in detail so that those of ordinary skill in the art can easily implement them. However, this disclosure may be embodied in many different forms and is not construed as limited to the embodiments set forth herein.

The terminology used herein is not intended to limit the present disclosure. The singular expression includes the plural expression unless a context clearly dictates otherwise.

As used herein, "combination thereof" means a mixture, a laminate, a composite, a copolymer, an alloy, a blend, and/or a reaction product of the constituents.

It should be understood that terms such as "comprises," "includes," or "have" are intended to designate the presence of an embodied feature, number, step, element, or a combination thereof, but these terms do not preclude the possibility of the presence or addition of one or more other features, number, step, element, or a combination thereof.

In the drawings, the thickness of layers, films, panels, or regions, are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a geometry formed on the whole surface when viewed from a plan view, but also a geometry formed on a partial surface.

The average particle diameter may be measured by a method well known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and performing calculations from resulting values and/or measurements. Unless otherwise defined, the average particle diameter D₅₀ may mean the diameter of particles having a cumulative volume of 50 volume% in a particle size distribution. In other words, when another definition is not otherwise provided, the average particle diameter D₅₀ means a diameter of particles having a cumulative volume of 50 volume% in the particle size distribution that is obtained by measuring a size (diameter or length of the long axis) of about 20 particles at random in a scanning electron microscope image. Herein, the size the particles may vary depending on the particle shape in terms of the measurement target. For example, the diameter may be measured for spherical particles, whereas the length of the long axis may be measured for non-spherical particles.

Herein, "or" is not to be construed as an exclusive meaning, for example, "A or B" is construed to include A, B, and A+B.

"Metal" is interpreted to include ordinary metals, transition metals and metalloids (semi-metals). As used herein, the term "metalloid" refers to an element having properties intermediate between those of metals and non-metals. Examples of the metalloid include, but are not limited to, boron (B), silicon (Si), germanium (Ge), arsenic (As), antimony (Sb), and tellurium (Te).

### Positive Electrode Active Material

Some embodiments provide a positive electrode active material including a core in a form of secondary particles including a lithium nickel-based composite oxide and a plurality of primary particles agglomerated, and a coating portion disposed on a surface of the core including a graphene having a layered structure and including a lithium ion conductive solid electrolyte.

To achieve high energy density, lithium nickel-based composite oxide positive electrode active materials with high specific capacity are used. In general, lithium nickel-based composite oxides may be used in a form of secondary particles in which a plurality of primary particles are agglomerated. The arrangement of the primary particles may become misaligned, such as gaps between the primary particles widening due to repeated volume expansion of the crystal structure with repeated charging and discharging. This may result in a large difference in a degree of shrinkage and expansion of the secondary particles and a degree of shrinkage and a degree of expansion of the positive electrode including the secondary particles. This causes structural cracking and destruction of the positive electrode active material and positive electrode, causes disconnection of the electrochemical charge transfer network, resulting in charge imbalance, causes an increase in the area for side reactions with the electrolyte, and causes a deterioration in the cycle-life of the battery.

To solve the above-described problems, there has been an attempt to coat the surface of a lithium nickel-based composite oxide positive electrode active material with a carbon-based material. By coating with a carbon-based material, electronic conductivity and structural stability are improved, but a trade-off effect may occur in which ionic conductivity and cycle-life characteristics are deteriorated.

Meanwhile, when using a lithium ion conductive solid electrolyte with excellent ionic conductivity, there is an effect of improving ionic conductivity, but powder resistance may increase, which may cause further deterioration of cycle-life characteristics.

According to some embodiments, a positive electrode active material includes both graphene having the layered structure and a lithium ion conductive solid electrolyte, thereby improving structural stability, improving powder resistance, and simultaneously enhancing ionic conductivity compared to a positive electrode active material having a coating portion including only one of these. In particular, by coating graphene having the layered structure, uniform coating is possible, and coating may be done using a dry method, which reduces manufacturing costs, and the positive electrode active material may exhibit its own conductivity simply by forming a coating portion including graphene having the layered structure. The positive electrode active material exhibit conductivity in themselves, so that the positive electrode and/or the rechargeable lithium battery may be manufactured without adding a conductive material or with minimizing the addition of a conductive material, thereby allowing for high capacity and high energy density for the positive electrode and/or the rechargeable lithium battery and improving high-temperature cycle-life characteristics of the battery.

### Coating Portion

The coating portion may be disposed on a core in a form of a secondary particle in which the aforementioned plurality of primary particles are agglomerated and may include graphene having a layered structure and a lithium ion conductive solid electrolyte.

The graphene may have excellent conductivity so that an increase in powder resistance of the positive electrode active material (by the coating portion) is suppressed, and the coating portion exhibits electronic conductivity so that electronic conductivity of the positive electrode active material may be improved. By using the aforementioned positive electrode active material, an amount of the conductive agent added may be minimized when manufacturing the positive electrode so that an amount of the positive electrode active material added may be relatively increased, thereby providing a positive electrode capable of realizing high capacity and high energy density. In addition, the graphene having the layered structure may be uniformly coated even during dry coating, thereby reducing manufacturing costs.

The number of layers of the layered structure is not specifically limited but may be measured as a layered structure having, for example, from 2 to 50 layers. The coating portion may include the graphene having the layered structure having from 5 to 50 layers, from 8 to 49 layers, from 10 to 48 layers, from 13 to 47 layers, from 15 to 46 layers, from 17 to 46 layers, from 18 to 40 layers, from 18 to 30 layers, from 18 to 25 layers, from 18 to 23 layers, from 18 to 22 layers, or from 18 to 20 layers. The number of layers in the layered structure may be measured from high-resolution transmission electron microscopy (HR-TEM) images of the positive electrode active material particles.

The interlayer spacing d₀₀₂ of the layered structure may be from about 0.320 nm to about 0.350 nm, for example, from about 0.325 nm to about 0.348 nm, from about 0.328 nm to about 0.345 nm, or from about 0.330 nm to about 0.342 nm. When the interlayer spacing d₀₀₂ of the layered structure satisfies the above ranges, the conductivity of the positive electrode active material itself may be further improved. The interlayer spacing d₀₀₂ may be measured by a method known to those skilled in the art. The interlayer spacing d₀₀₂ of the layered structure may be measured by obtaining the peak of a 002 plane through X-ray diffraction (XRD) of the coating portion and then analyzing the peak of the 002 plane. The 002 plane represents the range of 25.0° < 2θ < 27.0°, where 20 represents the diffraction angle. XRD measurement data may be subjected to noise removal (i.e., which may be a baseline setting) using a conventional program equipped in the XRD device as a data processing and analysis program. Additionally, the profile of the peak on the 002 plane may be fitted with a conventional fitting function such as a Gaussian function or a Lorenz function. In addition, the interlayer spacing d₀₀₂ of the layered structure may be expressed by a method of measuring the interlayer spacing d₀₀₂ of graphite particulates, and the interlayer spacing d₀₀₂ of graphite particulates may be measured through XRD analysis of the graphite particulates.

The graphene of the coating portion may have a ratio I_{D}/I_{G} of the peak intensity I_{D} around 1350 cm⁻¹ to the peak intensity I_{G} around 1580 cm⁻¹ in a Raman spectrum from about 0.15 to about 0.50, for example, from about 0.15 to about 0.45, from about 0.18 to about 0.45, or from about 0.20 to about 0.40. When the I_{D}/I_{G} value of the graphene satisfies the above ranges, powder conductivity may be imparted to the positive electrode active material itself.

The graphene of the coating portion may be derived from graphite particulates. A coating portion may be formed with a uniform thickness on the surface of the core particle, and powder conductivity may be imparted to the positive electrode active material. "Graphite particulates" means graphite that is particulate, and "particulate" means particles whose average particle size or diameter is on the order of several nanometers to several micrometers. Particularly, in this disclosure, the graphite particulates are graphite having an average size of less than or equal to about 2.5 µm. The positive electrode active material may have electronic conductivity even with a small amount of graphite particulates by including a coating portion including graphite particulates. The graphite particulates may be commercially available graphite or graphite manufactured therefrom, as long as the graphite particulates satisfy the above average particle diameter.

The graphite particulates are not specifically limited in type as long as the graphite particulates include some form of graphite and may include, for example, natural graphite or artificial graphite.

The graphite particulates may have a plate geometry, and an average size of the graphite particulates may be less than or equal to about 2 µm, less than or equal to about 1.5 µm, less than about 1 µm, less than or equal to about 0.7 µm, less than or equal to about 0.5 µm, or less than or equal to about 0.3 µm and may be greater than or equal to about 0.01 µm, greater than or equal to about 0.05 µm, greater than or equal to about 0.07 µm, greater than or equal to about 0.1 µm, or greater than or equal to about 0.2 µm. The average size of the graphite particulates may be measured through a particle size analyzer, and means the size of particles having a cumulative volume of 50 volume% in the particle size distribution. Also, the particle size here may mean a length of the long axis in the plane direction perpendicular to the thickness direction in the plate geometry. When the average size of the graphite particulates satisfies the above ranges, a coating portion of uniform thickness may be formed on the surface of the core particle, and the positive electrode active material including the coating portion may exhibit powder conductivity.

The graphite particulates may have a D₁₀, of less than or equal to about 500 nm, for example, from about 10 nm to about 500 nm, from about 20 nm to about 400 nm, from about 30 nm to about 300 nm, from about 40 nm to about 200 nm, from about 50 nm to about 150 nm, or from about 60 nm to about 120 nm. The D₁₀, of the graphite particulates may be obtained by using a particle size analyzer to obtain a particle size distribution of the graphite particulates, and taking the diameter of particles having a cumulative volume of 10 volume% in the particle size distribution as D₁₀. Also, the particle size here may mean a length of the long axis in the plane direction perpendicular to the thickness direction in the plate geometry.

The graphite particulates may have a D₉₀ of less than or equal to about 20 µm, for example, about 5 µm to about 20 µm, about 6 µm to about 18 µm, about 7 µm to about 16 µm, about 8 µm to about 14 µm, about 9 µm to about 12 µm, or about 10 µm to about 12 µm. The D₉₀ of the above graphite particulates may be obtained by using a particle size analyzer to obtain a particle size distribution of the graphite particulates and by taking the diameter of particles having a cumulative volume of 90 volume% in the particle size distribution as D₉₀. Also, the particle size may mean a length of the long axis in the plane direction perpendicular to the thickness direction in the plate geometry.

A span value of the graphite particulates may be greater than about 1, for example, about 1.05 to about 8, about 1.1 to about 7, about 1.2 to about 6, or about 1.4 to about 5. The span of the graphite particulates can be calculated as (D₉₀-D₁₀)/D₅₀, and D₁₀, D₅₀, and D₉₀ may be taken as the diameters corresponding to 10 volume%, 50 volume%, 90 volume%, respectively, of the cumulative volume in the particle size distribution. A greater span value of the graphite particulates means a wider particle size distribution, and a lesser span value of the graphite particulates means a narrower and more uniform particle size distribution.

The graphite particulates may have a BET specific surface area of about 30 m²/g to about 400 m²/g, for example about 50 m²/g to about 400 m²/g, about 100 m²/g to about 400 m²/g, about 150 m²/g to about 400 m²/g, about 200 m²/g to about 400 m²/g, about 250 m²/g to about 400 m²/g, or about 300 m²/g to about 400 m²/g. The BET specific surface area of the graphite particulates may be measured using the Brunauer-Emmett-Teller (BET) method. When the BET specific surface area of the graphite particulates satisfies the above ranges, uniform coating is possible, and electronic conductivity may be implemented even with a small amount.

The graphite particulates may have a ratio of the length of the long axis in the plane direction to the thickness in a plate geometry from about 50 to about 1000. When the ratio of the length of the long axis in the plane direction to the thickness of the graphite particulates satisfies the above range, a uniform coating portion may be formed, and the electronic conductivity of the positive electrode active material may be improved. The ratio of the length of the long axis in the plane direction to the thickness may be measured based on the electron microscope image. In the scanning electron microscope image of the graphite particulates, the thickness of the graphite particulates may be measured, and the length of the long axis in the plane direction orthogonal to the thickness direction may be measured to calculate the ratio. The thickness and length of long axis of the graphite particulates may mean an arithmetic mean of each value obtained through image analysis of the plurality of graphite particulates. Additionally, a combination of the thickness and the length of long axis of the graphite particulates does not necessarily mean that the graphite particulates are produced from the same graphite particulates.

The graphite particulates may have a ratio I_{D}/I_{G} of the peak intensity I_{D} around 1350 cm⁻¹ to the peak intensity I_{G} around 1580 cm⁻¹ in a Raman spectrum from about 0.15 to about 0.50, for example, from about 0.15 to about 0.45, from about 0.18 to about 0.45, or from about 0.20 to about 0.40. When the I_{D}/I_{G} value of the graphite particulates satisfies the above ranges, a coating portion may be formed with a uniform thickness on surfaces of the core particles, and the positive electrode active material may maximize adhesion and conductivity with the electrode plate.

As described above, in a previous study, when a coating portion composed of carbon-based materials alone is introduced, a reduction in powder resistance and an improvement in electronic conductivity may be secured, but there may be a deterioration in the ionic conductivity and in cycle-life characteristics of the lithium nickel-based composite oxide positive electrode active material. However, the coating portion according to some embodiments includes a lithium ion conductive solid electrolyte together with the graphene having the layered structure, thereby obtaining the advantages of securing structural stability and suppressing an increase in powder resistance by the graphene having the layered structure, while simultaneously resolving the disadvantage of deterioration in ionic conductivity and securing ionic conductivity as excellent as when using a lithium ion conductive solid electrolyte alone.

The lithium ion conductive solid electrolyte may be represented by Chemical Formula 1, below:

[Chemical Formula 1] Li₁₊ₓ₁Rₓ₁M₂₋ₓ₁(PO₄)_{3.}

In Chemical Formula 1, R is a metal such as Al, B, Sn, Ge, or a combination thereof. M is a transition metal such as Ti, Zr, Hf, or a combination thereof. Further, is 0≤x1<2.

The lithium ion conductive solid electrolyte may be more specifically represented by Chemical Formula 2, below:

[Chemical Formula 2] Li₁₊ₓ₂Alₓ₂Ti₂₋ₓ₂(PO₄)₃.

In Chemical Formula 2, 0≤x2<2.

The lithium ion conductive solid electrolyte may be in a form of particles having a geometry that is, for example, spherical or ellipsoidal. The average particle diameter D₅₀ of the particles of the lithium ion conductive solid electrolyte may be from about 1 nm to about 1 µm, for example, about 10 nm to about 1 µm, about 50 nm to about 1 µm, about 100 nm to about 1 µm, about 200 nm to about 1 µm, from about 200 nm to about 700 nm, from about 300 nm to about 700 nm, from about 400 nm to about 700 nm, or from about 400 nm to about 600 nm. The average particle diameter D₅₀ may be obtained by randomly measuring the size (diameter or length of long axis) of about 20 particles from a scanning electron microscope image of lithium ion conductive solid electrolyte particles to obtain a particle size distribution and taking the diameter of the particles having a cumulative volume of 50 volume% from the particle size distribution as the average particle diameter. When the lithium ion conductive solid electrolyte has a spherical particle shape, the particle size may refer to a diameter thereof, and when the lithium ion conductive solid electrolyte has a non-spherical particle shape, the particle size may refer to a length of a long axis thereof. When the average particle diameter of the lithium ion conductive solid electrolyte satisfies the above ranges, lithium ion movement may be smoothly achieved, thereby improving ionic conductivity.

For example, the graphene having the layered structure may be included in an amount from about 0.01 wt% to about 5 wt%, for example, greater than or equal to about 0.01 wt%, greater than or equal to about 0.02 wt%, greater than or equal to about 0.03 wt%, greater than or equal to about 0.04 wt%, greater than or equal to about 0.05 wt%, greater than or equal to about 0.06 wt%, greater than or equal to about 0.07 wt%, greater than or equal to about 0.08 wt%, greater than or equal to about 0.09 wt%, or greater than or equal to about 0.1 wt%, and less than or equal to about 5 wt%, less than or equal to about 4 wt%, less than or equal to about 3 wt%, less than or equal to about 2 wt%, less than or equal to about 1 wt%, less than or equal to about 0.9 wt%, less than or equal to about 0.8 wt%, less than or equal to about 0.7 wt%, less than or equal to about 0.6 wt%, less than or equal to about 0.5 wt%, less than or equal to about 0.4 wt%, less than or equal to about 0.3 wt%, or less than or equal to about 0.2 wt% based on the total weight of the positive electrode active material. When the amount of the graphene having the layered structure satisfies the above ranges, an increase in powder resistance may be effectively suppressed, and structural stability of the positive electrode active material may be improved.

The lithium ion conductive solid electrolyte may be included in an amount from about 0.05 wt% to about 6 wt%, for example, greater than or equal to about 0.05 wt%, greater than or equal to about 0.07 wt%, greater than or equal to about 0.09 wt%, greater than or equal to about 0.1 wt%, greater than or equal to about 0.15 wt%, greater than or equal to about 0.2 wt%, greater than or equal to about 0.25 wt%, greater than or equal to about 0.3 wt%, greater than or equal to about 0.35 wt%, greater than or equal to about 0.4 wt%, greater than or equal to about 0.45 wt%, or greater than or equal to about 0.5 wt%, and less than or equal to about 6 wt%, less than or equal to about 5 wt%, less than or equal to about 4 wt%, less than or equal to about 3 wt%, less than or equal to about 2 wt%, less than or equal to about 1.9 wt%, less than or equal to about 1.8 wt%, less than or equal to about 1.7 wt%, less than or equal to about 1.6 wt%, less than or equal to about 1.5 wt%, less than or equal to about 1.4 wt%, less than or equal to about 1.3 wt%, less than or equal to about 1.2 wt%, less than or equal to about 1.1 wt%, less than or equal to about 1 wt%, less than or equal to about 0.9 wt%, less than or equal to about 0.8 wt%, less than or equal to about 0.7 wt%, or less than or equal to about or 0.6 wt% based on the total weight of the positive electrode active material. When the amount of the lithium ion conductive solid electrolyte satisfies the above ranges, the ionic conductivity may be improved without excessively increasing powder resistance, and structural stability of the positive electrode active material may be improved. If the lithium ion conductive solid electrolyte is included in an amount exceeding the above ranges, the powder resistance may increase excessively.

The ratio B/A of the weight B of the lithium ion conductive solid electrolyte to the weight A of the graphene having the layered structure may be from about 1 to about 20, for example, from about 1.3 to about 18, from about 1.5 to about 15, from about 1.7 to about 12, from about 1.9 to about 10, or from about 2 to about 8. When the ratio B/A of the weight B of the lithium ion conductive solid electrolyte to the weight A of the graphene having the layered structure satisfies the above ranges, structural stability may be secured, an increase in powder resistance may be suppressed, and ionic conductivity may be improved at the same time. Additionally, the positive electrode and the rechargeable lithium battery including the positive electrode active material may have improved cycle-life characteristics.

The coating portion may be present continuously on the core surface or may be present discontinuously.

The graphene having the layered structure and the lithium ion conductive solid electrolyte included in the coating portion may be present in a mixed state and may be in the form of a coating layer that is present continuously on the core surface or may be in the form of an island that is present discontinuously.

Alternatively, the graphene having the layered structure and the lithium ion conductive solid electrolyte may not exist in a mixed state within the coating portion but may form separate coating portions. The coating portion may include a first coating portion including the graphene having the layered structure and a second coating portion including the lithium ion conductive solid electrolyte. The first coating portion may be in the form of a coating layer that exists continuously on the surface of the core and the second coating portion may be in the form of an island that exists discontinuously on the surface of the core. The geometry of the coating portion may be confirmed through the distribution area of the carbon (C) element included in the graphene having the layered structure and the phosphorus (P) element included in the lithium ion conductive solid electrolyte by performing SEM-EDS (Energy Dispersive X-ray Spectroscopy) elemental mapping analysis on the positive electrode active material.

The first coating portion may be conformally coated along the surface of the core in the form of secondary particles in which primary particles are agglomerated, and the second coating portion may be disposed on the surface of the core while simultaneously being disposed on the first coating portion. That is, the second coating portion may be disposed on the first coating portion located at the interface of the primary particles existing on the core surface among the conformal surfaces of the first coating portion.

In some embodiments, the second coating portion may be disposed on the surface of the core while simultaneously being disposed over the first coating portion. When the first coating portion is formed so as to thinly and uniformly cover only a portion of the surface of the core rather than covering the entire surface of the core, a second coating portion may be formed on the surface of the core that is not coated by the first coating portion. The second coating portion may be formed not only on the surface of the core that is not coated by the first coating portion but also on the first coating portion.

The geometry of the coating portion may be adjusted by changing the method of forming the coating portion on the positive electrode active material. When the graphite particulates and the lithium ion conductive solid electrolyte are mixed together and then coated on the core of the positive electrode active material, the coating portion may form a continuous or discontinuous coating portion on the surface of the core while the graphene having the layered structure and the lithium ion conductive solid electrolyte are mixed with each other. Alternatively, if the graphite particulates and the lithium ion conductive solid electrolyte are not mixed and are coated on the core separately, the first coating portion and the second coating portion may exist in various forms on the core depending on which of the two materials is coated first and how much of each of the two materials is used. Each coating method may be used in various ways, or may be adjusted or modified, by using various methods known to those skilled in the art to which the present disclosure pertains.

When the coating portion has a form of a coating layer continuously existing on the surface of the core, the coating portion may be formed very thinly and uniformly, and the thickness of the coating portion may be from about 1 nm to about 500 nm, for example, from about 10 nm to about 450 nm, from about 10 nm to about 400 nm, from about 10 nm to about 350 nm, from about 10 nm to about 300 nm, from about 10 nm to about 250 nm, from about 10 nm to about 200 nm, from about 10 nm to about 150 nm, from about 10 nm to about 100 nm, from about 10 nm to about 80 nm, or from about 10 nm to about 50 nm. When the thickness of the coating portion satisfies the above ranges, the structural stability of the positive electrode active material is improved, an increase in powder resistance is suppressed, and at the same time, ionic conductivity may be improved. In addition, the high-temperature cycle-life characteristics of the positive electrode and rechargeable lithium battery including this may be improved. The thickness of the coating portion may be measured, for example, through a TEM image of a cross-section of the positive electrode active material, or through TOF-SIMS analysis (Surface Analysis by Time-Of-Flight Secondary Ion Mass Spectrometry), XPS analysis (X-ray photoelectron spectroscopy), or EDS analysis (Energy-dispersive X-ray spectroscopy). The thickness of the coating portion may mean a sum of thicknesses of the first coating portion and the second coating portion.

Meanwhile, the positive electrode active material may further include a grain boundary coating portion disposed on the surface of primary particles inside the core and including a lithium ion conductive solid electrolyte. The grain boundary coating portion may exist in the internal portion of the secondary particles (i.e., not on the surface) and may be coated along an interface of the primary particles present in the internal portion of the secondary particles. The internal portion of the secondary particle means the entire internal portion except for the surface of the secondary particle (i.e., the core), and, for example, the internal portion of the secondary particle may mean the entire internal portion from a depth of approximately 2 µm from the core surface and may also mean a portion that is not touched by distilled water when washing the secondary particles of the positive electrode active material with distilled water. The grain boundary coating portion may further include graphene having the layered structure together with the lithium ion conductive solid electrolyte.

The method of forming a coating portion including the graphene having the layered structure and the lithium ion conductive solid electrolyte is not specifically limited but may be, for example, dry mixing.

The dry mixing may include a method of forming a coating portion by applying mechanical energy without using a solvent when mixing a core in the form of secondary particles in which a plurality of primary particles are agglomerated including the lithium nickel-based composite oxide, graphite particulates as a coating material, and a lithium ion conductive solid electrolyte. "dry" may mean a state in which there is no intentional contact with a solvent such as a process solvent or may mean a state in which there is no intentional inclusion of a solvent.

The dry mixing method may include, but is not limited to, a) a method in which a coating material, for example, graphite particulates and a lithium ion conductive solid electrolyte, is brought into contact with the core surface using, for example, a low-rotation ball mill, so that the graphite particulates and the lithium ion conductive solid electrolyte as the coating material are attached to the surface of the core particles, and at the same time, the attached coating material particles agglomerate with each other to form a coating portion; b) a method in which the coating material is restrained to the core surface by a movement of a pulverizing medium or by a rotor inside the device, so that the core and the coating material are combined, and at the same time, the coating material on the core is mechanically combined with each other by the stress accompanying the coating material, or the coating material on the core is softened or melted by the heat generated from the stress, thereby combining these particles; c) a method in which the core coated with the coating portion formed by the above a) and/or b) is heat-treated, so that a portion or all of the coating portion and the core are melted, and then cooled again. However, the present disclosure is not necessarily limited thereto, and any dry method that may be applied in the relevant technical field may be used.

The dry mixing may be performed according to a ball mill method such as a planetary ball mill, a low-speed ball mill, a high-speed ball mill, or a mechanofusion method. For example, the dry method may be performed according to the mechanofusion method. The mechanofusion method is a method in which a mixture is placed in a rotating container, the mixture is fixed to the inner wall of the container by centrifugal force, and then compressed through a gap between the inner wall of the container and an arm head that is slightly close to the inner wall of the container. The mechanofusion method corresponds to the above b) method. The container may be, for example, a mixer having a blade inside, and the mixer may have a diameter from about 5 cm to about 15 cm and a gap from about 0.01 mm to about 0.1 mm. A rotation speed of the mixer is not specifically limited but may be, for example, from about 1000 rpm to about 5000 rpm, from about 1500 rpm to about 4500 rpm, from about 2000 rpm to about 4000 rpm, or from about 2500 rpm to about 3500 rpm, and a rotation time may vary depending on the rotation speed but may be from about 30 seconds to about 1 hour, from about 1 minute to about 30 minutes, or from about 5 minutes to about 15 minutes.

Before the dry mixing, a step of preparing a core, graphite particulates, and a lithium ion conductive solid electrolyte may be further included. Because the graphene having the layered structure included in the coating portion may be derived from graphite particulates as described above, the graphite particulates may be prepared as a coating material. The graphite particulates and lithium ion conductive solid electrolyte may be described in the same manner as the graphite particulates and lithium ion conductive solid electrolyte of the aforementioned coating portion, and, therefore, detailed descriptions thereof will be omitted. Because the core can be explained in the same way as the core described later, a detailed explanation thereof is omitted.

The graphite particulates may be obtained from a commercially available source or may be prepared by pulverizing graphite.

The type of the graphite is not specifically limited and may be, for example, flake graphite. The graphite may be graphite used in a rechargeable lithium battery.

The flake graphite may have an average size from about 3 µm to about 25 µm, for example, from about 3 µm to about 20 µm, from about 3 µm to about 15 µm, from about 3 µm to about 10 µm, from about 3 µm to about 8 µm, from about 3 µm to about 6 µm, from about 3 µm to about 4 µm, or from about 3 µm to about 3.5 µm. An average size of the flake graphite means the size of particles having a cumulative volume of 50 volume% in the particle size distribution. Also, the flake graphite may have a plate-like particle shape, and a particle size may mean a length of long axis in the plane direction perpendicular to the thickness direction in the plate geometry. The average size of the flake graphite can be measured from a scanning electron microscope image. Further, the average size of the flake graphite may be measured through a particle size analyzer.

The flake graphite may have a ratio I_{D}/I_{G} of the peak intensity I_{D} near 1350 cm⁻¹ to the peak intensity I_{G} near 1580 cm⁻¹ in a Raman spectrum from about 0.01 to about 0.15, for example, from about 0.02 to about 0.14, from about 0.08 to about 0.14, or from about 0.1 to about 0.14.

The pulverizing may be performed using a milling process. The milling process may utilize a method known to those skilled in the art, and for example, a device such as a ball mill, a bead mill, a jet mill, a pin mill, a roller mill, or an air classifier mill (ACM) may be used.

The pulverizing may be performed using a ball mill device,
and zirconia beads (ZrO₂ bead) having a size of about 1 mm to about 3 mm may be used as balls (pulverizing media). A size of the zirconia beads may be from about 1.2 mm to about 2.8 mm, from about 1.3 mm to about 2.7 mm, or from about 1.5 mm to about 2.5 mm. If the size of the ball satisfies the above ranges, the particle size of the graphite particulates may be controlled to a desired level.

When the pulverizing is performed using a ball mill device, a number of balls to be introduced is not specifically limited, but, for example, the balls may be introduced in an amount of about 500 parts by weight to about 2000 parts by weight per 100 parts by weight of the graphite. The ball may be added in an amount of about 600 parts by weight to about 1800 parts by weight, about 700 parts by weight to about 1600 parts by weight, about 800 parts by weight to about 1400 parts by weight, or about 900 parts by weight to about 1100 parts by weight, based on 100 parts by weight of the graphite.

The pulverizing may vary depending on the pulverizing device and is not specifically limited, but when the pulverizing is performed using a ball mill device, it may be performed under conditions of about 200 rpm to about 5000 rpm, for example, under conditions of about 250 rpm to about 4,500 rpm, about 300 rpm to about 4,000 rpm, about 400 rpm to about 3,000 rpm, or about 600 rpm to about 3,000 rpm. The pulverizing time may vary depending on the pulverizing speed and is not specifically limited but may be carried out from about 30 minutes to about 3 hours or from about 35 minutes to about 3 hours. When the pulverizing speed and time satisfy the above ranges, the particle size of the graphite particulates may be controlled to the desired level.

The graphite particulates may be produced by pulverizing graphite according to the above pulverizing methods. Accordingly the graphite particulates may have excellent electronic conductivity, and, at the same time, by manufacturing graphite in the form of graphite particulates with a dense structure through pulverization, it is possible to increase the specific surface area.

### Core

The core of the positive electrode active material includes a lithium nickel-based composite oxide. The core may realize high capacity and high energy density by including a lithium nickel-based composite oxide.

The lithium nickel-based composite oxide may be represented by Chemical Formula 3, below:

[Chemical Formula 3] Liₐ₃Niₓ₃M³_{y3}M⁴_{z3}O_{2-b3}X_{b3}.

In Chemical Formula 3, 0.9≤a3≤1.2, 0.8≤x3<1, 0<y3≤0.2, 0≤z3≤0.2, 0.9≤x3+y3+z3≤1.1, and 0≤b3≤0.1. Further, M³ and M⁴ are each independently Al, B, Ba, Ca, Ce, Co, Cr, Cu, Fe, Mg, Mn, Mo, Nb, Si, Sn, Sr, Ti, V, W, Y, Zn, Zr, or a combination thereof. Even further, X is F, P, S, or a combination thereof.

In Chemical Formula 3, 0.85≤x3<1, 0<y3≤0.15, and 0≤z3≤0.15; or 0.9≤x3<1, 0<y3≤0.1, and 0≤z3≤0.1.

The lithium nickel-based composite oxide may be, for example, independently represented by Chemical Formula 4 or Chemical Formula 5.

Chemical Formula 4 is as follows:

[Chemical Formula 4] Liₐ₄Niₓ₄Co_{y4}M⁵_{z4}O_{2-b4}X_{b4}.

In Chemical Formula 4, 0.9≤a4≤1.2, 0.8≤x4<1, 0<y4≤0.2, 0≤z4≤0.2, 0.9≤x4+y4+z4≤1.1, and 0≤b4≤0.1. Further, M⁵ is Al, B, Ba, Ca, Ce, Cr, Cu, Fe, Mg, Mn, Mo, Nb, Si, Sn, Sr, Ti, V, W, Y, Zn, Zr, or a combination thereof. Even further, X is F, P, S, or a combination thereof.

In Chemical Formula 4, 0.9≤x4≤0.99, 0.01≤y4≤0.1, and 0≤z4≤0.1.

Chemical Formula 5 is as follows:

[Chemical Formula 5] Liₐ₅Niₓ₅Co_{y5}M⁶_{z5}M⁷_{w5}O_{2-b5}X_{b5}.

In Chemical Formula 5, 0.9≤a5≤1.2, 0.8≤x5≤0.98, 0.01≤y5≤0.19, 0.01≤z5≤0.19, 0≤w5≤0.19, 0.9≤x5+y5+z5+w5≤1.1, and 0≤b5≤0.1, M⁶ is Al, Mn, or a combination thereof Further, M⁷ is B, Ba, Ca, Ce, Cr, Cu, Fe, Mg, Mo, Nb, Si, Sn, Sr, Ti, V, W, Y, Zn, Zr, or a combination thereof. Even further, X is F, P, S, or a combination thereof.

In Chemical Formula 5, 0.9≤x5≤0.98, 0.01≤y5≤0.09, 0.01≤z5≤0.09, and 0≤w5≤0.09.

The lithium nickel-based composite oxide may each independently be a high nickel-based positive electrode active material. The lithium nickel-based composite oxide may have an amount of nickel greater than or equal to about 80 mol%, for example, greater than or equal to about 85 mol%, greater than or equal to about 90 mol%, greater than or equal to about 91 mol%, or greater than or equal to about 94 mol%, and less than or equal to about 99 mol% based on 100 mol% of the total metal excluding lithium. When the amount of nickel satisfies the above ranges, high capacity and high energy density may be achieved.

The core is in the form of secondary particles in which a plurality of primary particles are agglomerated. The secondary particles may be spherical, ellipsoidal, or polyhedral or may have an irregular geometry, and the primary particles may have a geometry of a sphere, an ellipsoid, a plate, or a combination thereof. An average particle diameter D₅₀ of the secondary particles, i.e., the average particle diameter D₅₀ of the core, may be about 8 µm to about 20 µm, for example, about 9 µm to about 18 µm, or about 10 µm to about 15 µm. The average particle diameter D₅₀ may be obtained by randomly measuring the size (diameter or length of long axis) of about 20 particles from a scanning electron microscope image of lithium nickel-based composite oxide particles in the form of secondary particles to obtain a particle size distribution, and taking the diameter of the particles having a cumulative volume of 50 volume% from the particle size distribution as the average particle diameter. When the core (i.e., secondary particles) has a spherical particle shape, the particle size may refer to a diameter thereof, and when the core (i.e., secondary particles) has a non-spherical particle shape, the particle size may refer to a length of a long axis thereof. The average particle diameter D₅₀ of the primary particles forming the secondary particles may be less than or equal to about 6 µm and may be, for example, from about 100 nm to about 4 µm, from about 100 nm to about 2 µm, from about 200 nm to about 800 nm, or from about 300 nm to about 700 nm. The average particle diameter of the primary particles may be obtained by randomly measuring the size (diameter or length of long axis) of about 20 primary particles from a scanning electron microscope or transmission electron microscope image of the surface of the secondary particles to obtain a particle size distribution, and taking the size of particles having a cumulative volume of 50 volume% from the particle size distribution. When the primary particles forming the secondary particles have a spherical particle shape, the particle size may refer to a diameter thereof, and when the primary particles forming the secondary particles have a non-spherical particle shape, the particle size may refer to a length of a long axis thereof.

The positive electrode active material may implement low powder resistance by including the aforementioned core and coating portion. The powder resistance of the positive electrode active material may be greater than about 85 Ω·cm and less than about 150 Ω·cm, for example, greater than about 85 Ω·cm and less than or equal about 140 Ω·cm, greater than about 85 Ω·cm and less than or equal about 130 Ω·cm, greater than about 85 Ω·cm less than or equal about 120 Ω·cm, greater than about 85 Ω·cm less than or equal about 110 Ω·cm, greater than about 85 Ω·cm less than or equal about 100 Ω·cm, or greater than about 85 Ω·cm less than or equal about 90 Ω·cm. The powder resistance of the positive electrode active material may be measured by controlling the pressure applied to the powder using a powder resistance measuring device (i.e., by a device such as one by the manufacturer "Hioki" and with the product name "RM3543") equipped with a 4-pin probe.

### Positive Electrode

Some embodiments provide a positive electrode including a positive electrode current collector and a positive electrode active material layer disposed on the positive electrode current collector and including the aforementioned positive electrode active material.

The positive electrode may have a relatively low interfacial resistance by including the aforementioned positive electrode active material. The interfacial resistance of the positive electrode may be greater than or equal to about 50 Ω and less than about 150 Ω, for example, from about 60 Ω to about 140 Q, from about 70 Ω to about 130 Q, from about 80 Ω to about 120 Q, from about 90 Ω to about 110 Q, or from about 100 Ω to about 110 Q. The interfacial resistance of the positive electrode may be measured using an electrochemical impedance analyzer (EIS, Electrochemical Impedance Spectroscopy), and, for example, the amplitude may be ±10 mV and the frequency range may be about 10 mHz to about 1 MHz. The resistance measurement of the positive electrode is performed by charging the battery to a maximum voltage of 4.25 V based on the Li negative electrode with a constant current of 0.1 C-rate, then cutting off at a current of 0.05 C-rate while maintaining the constant voltage of 4.25 V, and leaving a pause time of 1 hour. Afterwards, resistance may be measured using an impedance analyzer in the equilibrium voltage state according to the 2-probe method.

### Positive Electrode Current Collector

The positive electrode current collector is not particularly limited as long as the positive electrode current collector has conductivity and does not cause a chemical change in the rechargeable lithium battery. The positive electrode current collector may be an aluminum foil or a stainless-steel foil having a thickness of about 10 µm to about 15 µm.

### Positive Electrode Active Material Layer

The positive electrode active material layer includes the aforementioned positive electrode active material.

Various details of the positive electrode active material are the same as described above, and, thus, a description of those details is omitted below.

An amount of the positive electrode active material may be from about 60 wt% to about 99.9 wt%, from about 70 wt% to about 99.8 wt%, from about 80 wt% to about 99 wt%, or from about 90 wt% to about 98 wt% based on the total weight of the positive electrode active material layer. When the aforementioned positive electrode active material is included, the same effect may be achieved even with relatively less conductive material than when a known positive electrode active material is used, and, thus, a relatively large amount of the positive electrode active material may be included. Accordingly, the energy density may be improved.

The positive electrode active material layer may optionally further include a binder, a conductive material, or a combination thereof.

The binder improves binding properties of the positive electrode active material particles with one another and with the positive electrode current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and/or nylon, but the binder is not limited thereto.

The conductive material is included to provide electrode conductivity and any electrically conductive material may be used as a conductive material unless it causes a chemical change. Examples of the conductive material may include a carbon-based material such as natural graphite, artificial graphite, carbon black, acetylene black, Ketjen black, a carbon fiber, a carbon nanofiber, and/or a carbon nanotube; a metal-based material of a metal powder or a metal fiber including copper, nickel, aluminum, and/or silver; a conductive polymer such as a polyphenylene derivative; or a mixture thereof.

In the positive electrode active material layer, an amount of the binder may be from about 0.1 wt% to about 5 wt% based on the total weight of the positive electrode active material layer, and an amount of the conductive material may be from about 0.1 wt% to about 5 wt% based on the total weight of the positive electrode active material layer.

The positive electrode active material layer may further include an irreversible positive electrode additive within a range that does not impede the purpose of the present invention in addition to the aforementioned components.

The irreversible positive electrode additive refers to a compound that acts as a sacrificial positive electrode that can compensate for the conversion to irreversible Li that no longer participates in the charge/discharge reaction by participating in the formation of a SEI (solid electrolyte interface) film on the negative electrode surface during charge/discharge. The irreversible positive electrode additive is a compound that can be decomposed during the formation process to provide Li and does not participate in the subsequent charge/discharge process. By adding such an irreversible positive electrode additive, the consumed lithium may be replenished, thereby compensating for lithium loss and improving the energy density, cycle-life, and stability of the battery.

The irreversible positive electrode additive includes a compound that serves as a sacrificial positive electrode, such as an Fe-containing oxide, an Mn-containing oxide, and a Co-containing oxide.

The Fe-containing oxide may include Li₅FeO₄, LiFeO₂, LiFe₅O₈, or a combination thereof. The Mn-containing oxide may include overlithiated manganese oxide, and an example of the overlithiated manganese oxide is Li₆MnO₄. The Co-containing oxides may include overlithiated cobalt oxide, and an example of the overlithiated cobalt oxide is Li₆CoO₄.

### Rechargeable Lithium Battery

A rechargeable lithium battery according to some embodiments includes the aforementioned positive electrode, a negative electrode, and an electrolyte. The rechargeable lithium battery may include a positive electrode, a negative electrode, a separator between the positive electrode and the negative electrode, and an electrolyte.

The rechargeable lithium battery may be classified into cylindrical, prismatic, pouch-shaped, or coin-shaped, depending on the geometry of the rechargeable lithium battery.

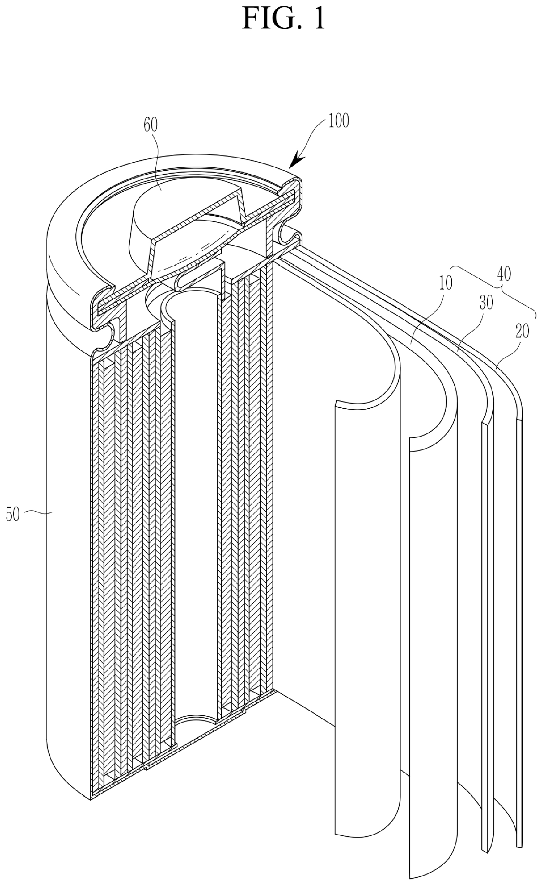

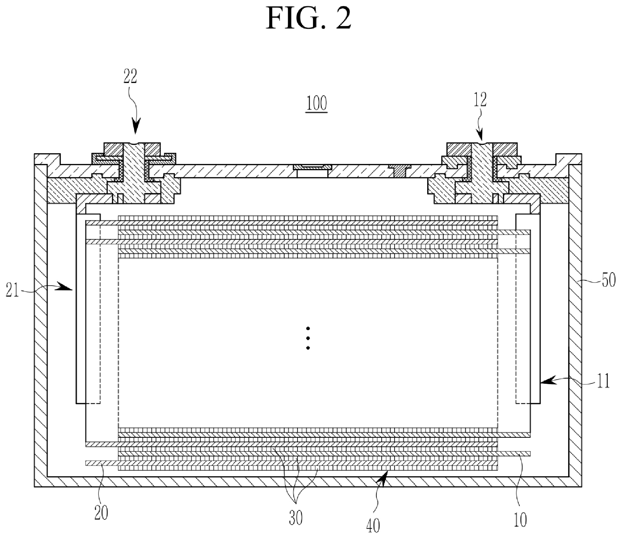

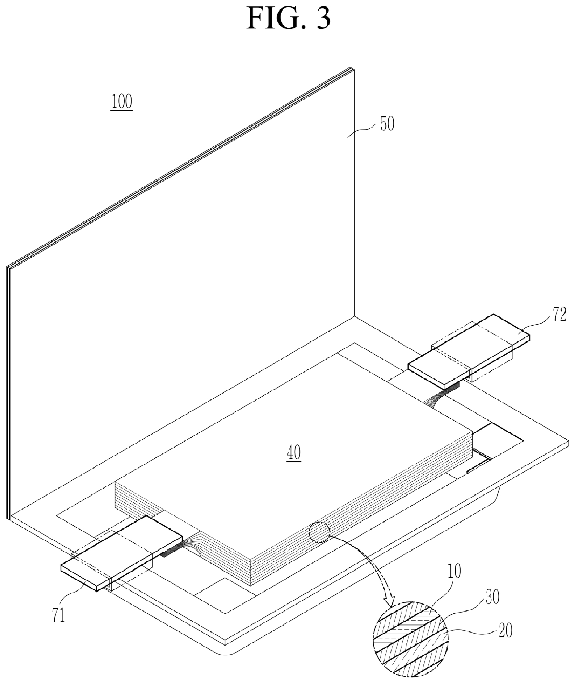

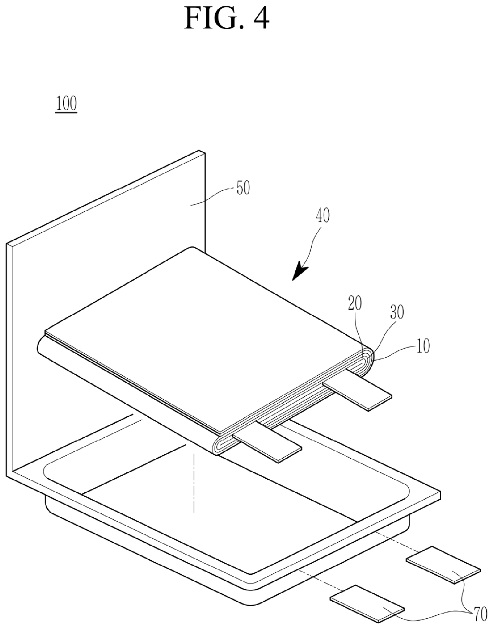

FIGS. 1 to 4 are schematic diagrams each showing a rechargeable lithium battery according to some embodiments of the present disclosure. FIG. 1 shows a cylindrical battery, FIG. 2 shows a prismatic battery, and FIGS. 3 and 4 each show a battery having a pouch geometry. The rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte (not shown). The rechargeable lithium battery 100 may include a sealer 60 that seals the case 50 as shown in FIG. 1. Additionally, in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70, that is, a positive electrode tab 71 and a negative electrode tab 72 serving as an electrical path for inducing the current formed in the electrode assembly 40 to the outside.

Because some details regarding the positive electrode included in the rechargeable lithium battery are the same as those described above, those details are omitted below. A rechargeable lithium battery according to embodiments of the present disclosure can secure excellent cycle-life characteristics and rate capability by including the above-described positive electrode, while significantly improving the electrical resistance of the electrode.

### Negative Electrode

The negative electrode for a rechargeable lithium battery includes a negative electrode current collector and a negative electrode active material layer on the negative electrode current collector. The negative electrode active material layer includes a negative electrode active material and may optionally further include a binder, a conductive material, or a combination thereof.

The negative electrode current collector is not particularly limited as long as it has conductivity and does not cause a chemical change in the rechargeable lithium battery and may be a copper foil having a thickness from about 10 µm to about 15 µm.

The negative electrode active material includes a material capable of reversibly intercalating/deintercalating lithium ions, lithium metal, an alloy of lithium metal, a material capable of doping and dedoping lithium, or a transition metal oxide.

The material capable of reversibly intercalating/deintercalating the lithium ions may include a carbon-based negative electrode active material, for example, crystalline carbon, amorphous carbon, or a combination thereof. The crystalline carbon may be irregular, or sheet, flake, spherical, or fiber shaped natural graphite or artificial graphite. The amorphous carbon may be a soft carbon, a hard carbon, a mesophase pitch carbonization product, or calcined coke.

As the alloy of lithium metal, an alloy of lithium and a metal selected from Na, K, Rb, Cs, Fr, Be, Mg, Ca, Sr, Si, Sb, Pb, In, Zn, Ba, Ra, Ge, Al, and Sn may be used.

The material capable of doping and dedoping lithium may be a Si-based negative electrode active material or a Sn-based negative electrode active material. The Si-based negative electrode active material may be silicon, a silicon-carbon composite, SiOₓ (0<x≤2), a Si-Q alloy (wherein Q is an element selected from an alkali metal, an alkaline earth metal, a Group 13 element, a Group 14 element [excluding Si], a Group 15 element, a Group 16 element, a transition metal, a rare earth element, and a combination thereof, and, for example, selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be Sn, SnO₂, a Sn alloy, or a combination thereof.

The silicon-carbon composite may be a composite of silicon and amorphous carbon. The average particle diameter D₅₀ of the silicon-carbon composite particles may be, for example, from about 0.5 µm to about 20 µm. According to some embodiments, the silicon-carbon composite may be in the form of silicon particles and amorphous carbon coated on the surface of the silicon particles. The silicon-carbon composite may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. The silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, or calcined coke.

When the silicon-carbon composite includes silicon and amorphous carbon, an amount of the silicon may be from about 10 wt% to about 50 wt%, and an amount of the amorphous carbon may be from about 50 wt% to about 90 wt% based on the total weight of the silicon-carbon composite. In addition, when the composite includes silicon, amorphous carbon, and crystalline carbon, an amount of silicon may be from about 10 wt% to about 50 wt%, an amount of crystalline carbon may be from about 10 wt% to about 70 wt%, and an amount of amorphous carbon may be from about 20 wt% to about 40 wt% based on the total weight of the silicon-carbon composite.

Additionally, a thickness of the amorphous carbon coating layer may be from about 5 nm to about 100 nm. An average particle diameter D₅₀ of the silicon particles (primary particles) may be from about 10 nm to about 1 µm, or from about 10 nm to about 200 nm. The silicon particles may be present as silicon alone, in a form of a silicon alloy, or in an oxidized form. The oxidized form of the silicon may be represented as SiOₓ (0<x≤2). The atomic ratio of Si:O, which indicates the degree of oxidation, may be from about 99:1 to about 33:67. Herein, when a definition is not otherwise provided, an average particle diameter D₅₀ indicates a diameter of particle where an accumulated volume is about 50 volume% in a particle size distribution.

The Si-based negative electrode active material or Sn-based negative electrode active material may be mixed with the carbon-based negative electrode active material. When using a mixture of a Si-based negative electrode active material or a Sn-based negative electrode active material and a carbon-based negative electrode active material, the mixing ratio may be from about 1:99 to about 90:10 by weight.

The negative electrode active material may be included in an amount from about 90 wt% to about 99.8 wt% or from about 94 wt% to about 99 wt%, based on the total weight of the negative electrode active material layer.

The binder serves to well adhere the negative electrode active material particles to each other and also to adhere the negative electrode active material to the negative electrode current collector. The binder may be a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber and may be, for example, polytetrafluoroethylene, polyvinylidene fluoride, a polyvinylidene fluoride-hexafluoropropylene copolymer, polyethylene oxide, or a combination thereof.

The conductive material is included to provide electrode conductivity, and any electrically conductive material may be used as a conductive material unless the electrically conductive material causes a chemical change. Examples of the conductive material include a carbon-based material such as natural graphite, artificial graphite, carbon black, acetylene black, Ketjen black, a carbon fiber, a carbon nanofiber, and/or a carbon nanotube; a metal-based material of a metal powder or a metal fiber including copper, nickel, aluminum, and/or silver; a conductive polymer such as a polyphenylene derivative; or a mixture thereof.

An amount of the binder may be from about 0.1 wt% to about 5 wt% based on the total weight of the negative electrode active material layer, and an amount of the conductive material may be from about 0.1 wt% to about 5 wt% based on the total weight of the negative electrode active material layer.

### Electrolyte

The electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery. The non-aqueous organic solvent may be a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), and/or butylene carbonate (BC). The ester-based solvent may include methyl acetate, ethyl acetate, n-propyl acetate, t-butyl acetate, methyl propionate, ethyl propionate, decanolide, mevalonolactone, valerolactone, and/or caprolactone. The ether-based solvent may include dibutyl ether, tetraglyme, diglyme, dimethoxyethane, 2-methyltetrahydrofuran, 2,5-dimethyltetrahydrofuran, and/or tetrahydrofuran. In addition, the ketone-based solvent may include cyclohexanone. The alcohol-based solvent may include ethanol and/or isopropyl alcohol, and the aprotic solvent may include nitriles such as R-CN (wherein R is a C2 to C20 linear, branched, or cyclic hydrocarbon group, and may include a double bond, an aromatic ring, and/or an ether group); amides such as dimethylformamide; dioxolanes such as 1,3-dioxolane, and/or 1,4-dioxolane; and/or sulfolanes.

The non-aqueous organic solvent may be used alone or in a mixture of two or more types, and when two or more types are used in a mixture, a mixing ratio can be appropriately adjusted according to the desired battery performance, which is widely known to those working in the field.

When using a carbonate-based solvent, a cyclic carbonate and a chain carbonate may be mixed and used, and the cyclic carbonate and the chain carbonate may be mixed in a volume ratio from about 1:1 to about 1:9.

The non-aqueous organic solvent may further include an aromatic hydrocarbon-based organic solvent. A carbonate-based solvent and an aromatic hydrocarbon-based organic solvent may be mixed and used in a volume ratio from about 1:1 to about 30:1.

The electrolyte solution may further include vinylethylene carbonate, vinylene carbonate, or an ethylene carbonate-based compound to improve a cycle-life of the battery.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the non-aqueous organic solvent supplies lithium ions in a battery, enables a basic operation of a rechargeable lithium battery, and improves transportation of the lithium ions between positive and negative electrodes. Examples of the lithium salt may include at least one selected from LiPF₆, LiBF₄, LiSbF₆, LiAsF₆, LiClO₄, LiAlO₂, LiAlCl₄, LiPO₂F₂, LiCl, LiI, LiN(SO₂C₂F₃)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. When the concentration of lithium salt is within the above range, the electrolyte solution has appropriate ionic conductivity and viscosity such that the battery performs well and such that lithium ions can move effectively.

### Separator

Depending on the type of the rechargeable lithium battery, a separator may be present between the positive electrode and the negative electrode. The separator may include polyethylene, polypropylene, polyvinylidene fluoride, or a multilayer film of two or more layers and/or may include a mixed multilayer film such as a polyethylene/polypropylene two-layer separator, polyethylene/polypropylene/polyethylene three-layer separator, and/or polypropylene/polyethylene/polypropylene three-layer separator.

The separator may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, and polytetrafluoroethylene (e.g., TEFLON^{®}). The porous substrate may be formed of glass fibers, or may be a membrane in which the polymer and glass fibers are mixed.

The porous substrate may have a thickness from about 1 µm to about 40 µm, for example, from about 1 µm to about 30 µm, from about 1 µm to about 20 µm, from about 5 µm to about 15 µm, or from about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt of (meth)acrylamidosulfonic.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the inorganic material is not limited thereto. An average particle diameter D₅₀ of the inorganic particles may be from about 1 nm to about 2000 nm, for example, from about 100 nm to about 1000 nm or from about 100 nm to about 700 nm.

The organic material and the inorganic material may be mixed in one coating layer, or a coating layer including an organic material and a coating layer including an inorganic material may be stacked.

A thickness of the coating layer may be from about 0.5 µm to about 20 µm, for example, from about 1 µm to about 10 µm, or from about 1 µm to about 5 µm.

Hereinafter, the present invention will be described in detail through examples. However, the examples described below are only examples for explaining embodiments of the present disclosure, and the present disclosure is not limited to the examples described below.

### Example 1

### (1) Preparation of Positive Electrode Active Material

A nickel-based hydroxide precursor (Ni_{0.91}CO_{0.08}Al_{0.01}(OH)₂) was prepared by adding nickel sulfate (NiSO₄·6H₂O), cobalt sulfate (CoSO₄·7H₂O), and sodium aluminum sulfate (NaAl(SO₄)₂·12H₂O) to distilled water at a molar ratio of 91:8:1, followed by adding aqueous ammonia (NH₄OH) as a complexing agent and stirring for 18 hours to carry out a co-precipitation reaction.

The nickel-based hydroxide precursor was mixed with LiOH such that the molar ratio of Li:(Ni+Co+Al) was 1:1, and the mixture was calcined at 730°C for 8 hours in an oxygen atmosphere to prepare core particles.

The core particles were in the form of secondary particles in which primary particles were aggregated, and the secondary particles had an average particle diameter (D₅₀) of about 16 µm, and had a composition of a lithium nickel-based composite oxide (LiNi_{0.91}Co_{0.08}Al_{0.01}O₂).

And 4 g of flake graphite (product name: G5, manufacturer: C-one; an average size being 3 µm and a ratio I_{D}/I_{G} of peak intensity I_{D} around 1350 cm⁻¹ to peak intensity I_{G} around 1580 cm⁻¹ in the Raman spectrum being 0.12) was mixed with 40 g of ZrO₂ beads with a particle diameter of 2 mm. Subsequently, the flake graphite was milled under a condition of 1,000 rpm for 1 hour to prepare graphite particulates.

The core particles, the graphite particulates (an average size being 0.26 µm, a BET specific surface area being 300 m²/g, and a ratio I_{D}/I_{G} of peak intensity I_{D} around 1350 cm⁻¹ to peak intensity I_{G} around 1580 cm⁻¹ in the Raman spectrum being 0.28) and the lithium ion conductive solid electrolyte of Li_{1.3}Al_{0.3}Ti_{1.7}(PO₄)₃ (product name: L0409, manufacturer: Sejin C&I) with an average particle diameter D₅₀ of 0.5 µm were put in a dry mixer and then dry-mixed by applying a shear rate of 1000 rpm for 1 minute thereto prepare a positive electrode active material in which a coating portion containing graphene with a layered structure derived from the graphite particulates and the lithium ion conductive solid electrolyte was formed on the surface of the core particles.

Based on a total weight of the positive electrode active material, 0.1 wt% of the graphene with a layered structure and 0.5 wt% of the lithium ion conductive solid electrolyte were included.

### (2) Manufacturing of Positive Electrode

The prepared positive electrode active material, polyvinylidene fluoride as a binder, and carbon black as a conductive material were mixed in a weight ratio of 96:2:2, and then the mixture was added to an N-methyl-2-pyrrolidone solvent and dispersed in the N-methyl-2-pyrrolidone solvent to prepare a slurry for forming a positive electrode active material layer. The slurry for forming the positive electrode active material layer was coated on an aluminum foil and then compressed and dried to manufacture a positive electrode.

### (3) Manufacturing of Rechargeable Lithium Battery Cell

The manufactured positive electrode and a lithium metal counter electrode (i.e., operating as a negative electrode) were used to manufacture a 2032-type coin half-cell. A separator made of a porous polyethylene film and having a thickness of about 16 µm was disposed between the positive electrode and the lithium metal counter electrode, and an electrolyte solution was injected into an assembly of the separator, the positive electrode, and the lithium metal counter electrode. The electrolyte solution was prepared by mixing ethylenecarbonate (EC) and ethylmethylcarbonate (EMC) in a volume ratio of 3:5 and dissolving 1.1 M LiPF₆ in the mixed solvent.

### Example 2

The same core particles, graphite particulates, and lithium ion conductive solid electrolyte as in Example 1 were respectively prepared in the same amounts as in Example 1, but a different coating method therefrom was used to coat the graphite particulates and the lithium ion conductive solid electrolyte on the core particles to prepare a positive electrode active material.

Specifically, the core particles and the graphite particulates were put in a dry mixer and then dry-mixed by applying a shear force of 1000 rpm to the core particles and the graphite particulates for 10 minutes to form a first coating portion including graphene with a layered structure derived from the graphite particulates on the core particles. Subsequently, a lithium ion conductive solid electrolyte was added to the core particles on which the first coating portion was formed and then mixed again with a ball mill for 30 minutes to further form a second coating portion including the lithium ion conductive solid electrolyte on the core particles on which the first coating portion was formed to prepare a positive electrode active material.

Except for using the prepared positive electrode active material instead of the positive electrode active material of Example 1, a positive electrode and a rechargeable lithium battery cell including the positive electrode were manufactured in the same manner as in Example 1.

### Comparative Example 1

A positive electrode active material was prepared substantially in the same manner as in Example 1 except that the core particles and the graphite particulates alone were dry-mixed without adding the lithium ion conductive solid electrolyte in '(1) Preparation of Positive Electrode Active Material' of Example 1 and then used to manufacture a positive electrode and a rechargeable lithium battery cell in the same manner as in Example 1.

### Comparative Example 2

A positive electrode active material was prepared substantially in the same manner as in Example 1 except that the core particles and the lithium ion conductive solid electrolyte alone were dry-mixed without adding the graphite particulates in '(1) Preparation of Positive Electrode Active Material' of Example 1 and then used to manufacture a positive electrode and a rechargeable lithium battery cell in the same manner as in Example 1.

### Comparative Example 3

A positive electrode active material, a positive electrode, and a rechargeable lithium battery cell were manufactured substantially in the same manner as in Comparative Example 2 except that the lithium ion conductive solid electrolyte was included in an amount of 2 wt% based on a total weight of the positive electrode active material in '(1) Preparation of Positive Electrode Active Material' of Comparative Example 2.

### Comparative Example 4

A positive electrode active material was prepared substantially in the same manner as in Example 1 except that LiNi_{0.91}Co_{0.08}Al_{0.01}O₂ in the form of single particles having an average particle diameter of 3 µm, manufactured by POSCO Holdings, was used as the core particles in '(1) Preparation of Positive Electrode Active Material' of Example 1 and then used to manufacture a positive electrode and a rechargeable lithium battery cell substantially in the same manner as in Example 1.

### Evaluation Example 1: Analysis of Surface and Coating Portion of Positive Electrode Active Material

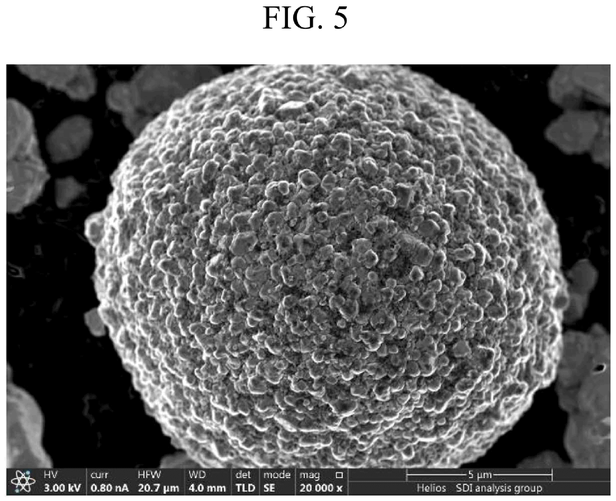

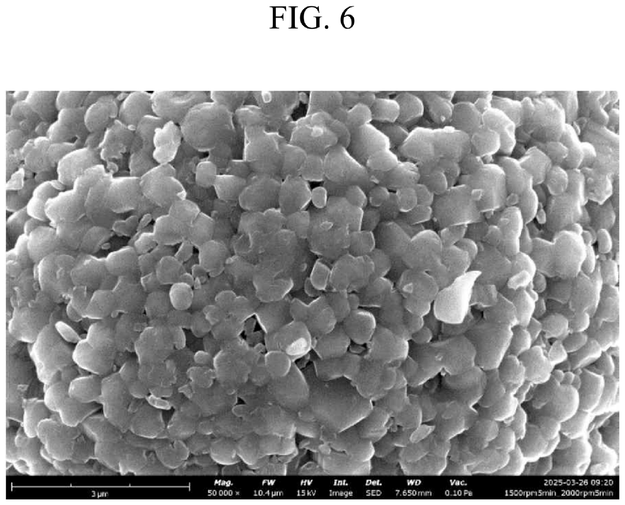

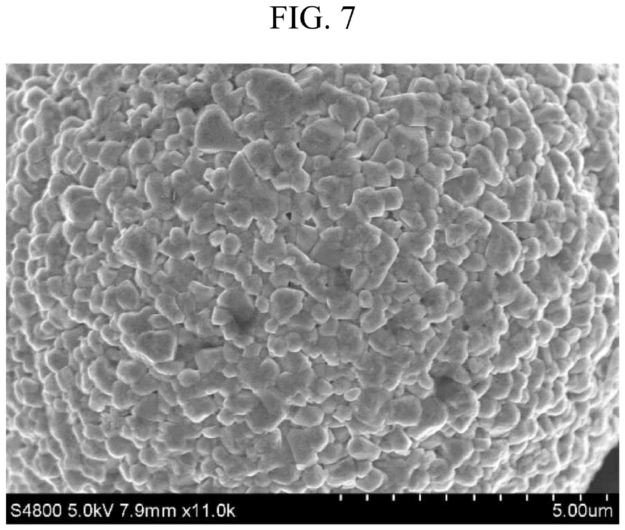

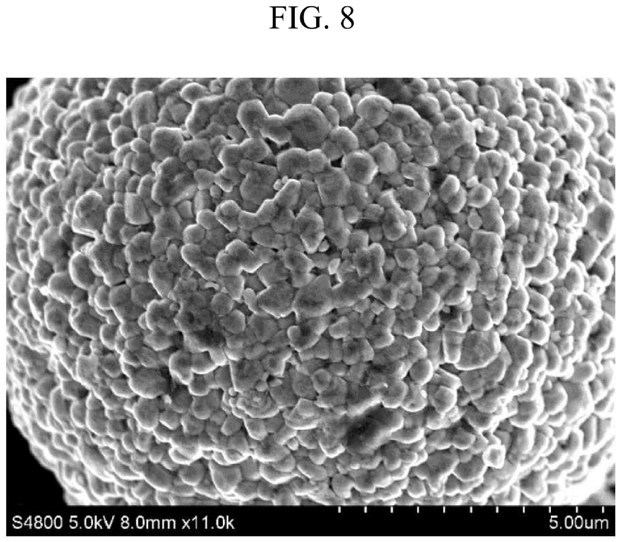

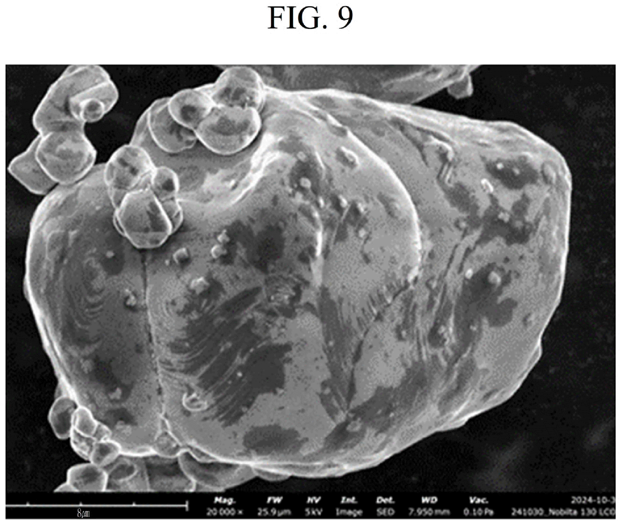

FIGS. 5 to 9 show each scanning electron microscope (SEM) image of the surfaces of the positive electrode active materials of Example 2 and Comparative Examples 1 to 4 according to some embodiments of the present disclosure. Particularly, surface images were taken of the positive electrode active materials of Example 2 and Comparative Example 1 to 4 using a scanning electron microscope (SEM), and the results are shown in FIGS. 5 to 9.

The positive electrode active materials of Example 2 and Comparative Examples 1 to 3 were confirmed to be in a form of secondary particles in which a plurality of primary particles were agglomerated, whereas the positive electrode active material of Comparative Example 4 was confirmed to be in a form of single particles. Meanwhile, Comparative Example 2 had no relatively dark portion on the surface of the positive electrode active material, but the other examples and comparative examples each exhibited a relatively dark portion on the surface of the positive electrode active materials, which confirmed that a coating portion was formed.

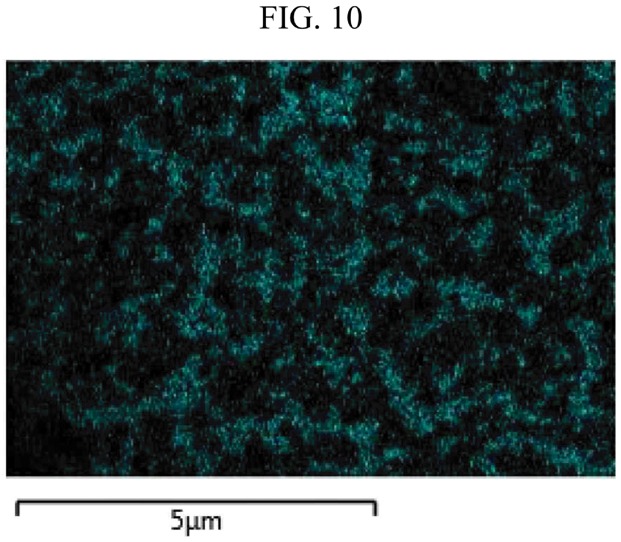

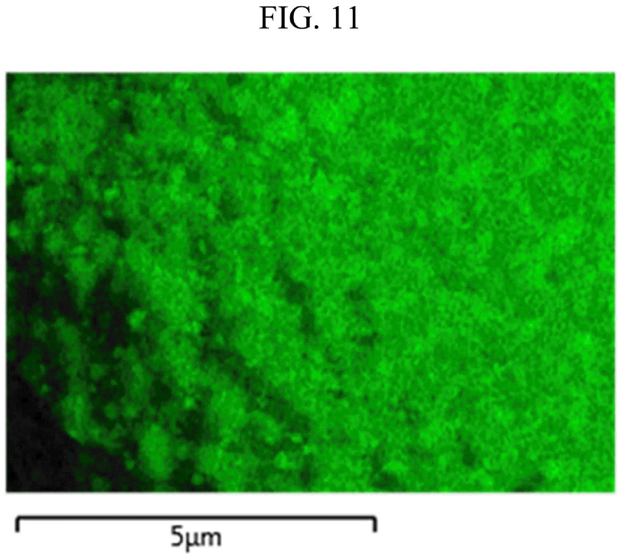

The surface of the positive electrode active material according to Example 2 was subjected to SEM-EDS (Energy Dispersive X-ray Spectroscopy) elemental mapping analysis, and the analysis results are shown in FIGS. 10 and 11.

FIGS. 10 and 11 show the SEM-EDS analysis results of the positive electrode active material surface of Example 2 according to some embodiments of the present disclosure. In FIG. 10, in which carbon atoms were highlighted, C derived from a carbon-based material was evenly distributed on the entire surface of the core particles, which confirmed that the carbon-based material was coated on the portion of the core particle surface in a continuous membrane or film. In FIG. 11, in which phosphorous was highlighted, P derived from a lithium ion conductive solid electrolyte was distributed on a portion of the core particle surface, which confirmed that the lithium ion conductive solid electrolyte was coated on the portion of the core particle surface in the form of an island.

The graphene of the positive electrode active materials of Examples 1 and 2 and Comparative Examples 1, 3, and 4 was analyzed with respect to the number of layers and thicknesses of the layers, and the results are shown in Table 1. The positive electrode active material of Comparative Example 2, in which no graphite particulates were added, exhibited no formation of graphene with a layered structure, and so the evaluation was not performed. In examples where the evaluation was performed, the evaluation was specifically performed by taking images of the cross-sections of the positive electrode active materials with a transmission electron microscope (TEM) to measure a thickness and the number of layers at 20 points and to calculate an arithmetic mean of the measurements.

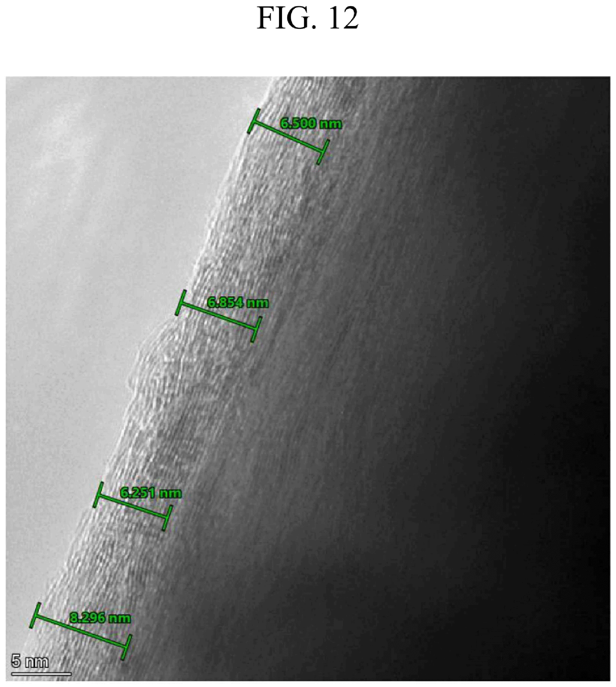

FIGS. 12 to 16 show the transmission electron microscope images of coating portions on the cross-sections of the positive electrode active materials of Examples 1 and 2 and Comparative Examples 1, 3, and 4 according to some embodiments of the present disclosure. The coating portions were checked with respect to a thickness at each point.

**Table 1:**

| | Graphene having the layered structure in coating portion | |
|---|---|---|
| | Thickness of layer (nm) | The number of layer (ea) |
| Example 1 | 6.2 | 19 |
| Example 2 | 5.9 | 18 |
| Comparative Example 1 | 6.6 | 20 |
| Comparative Example 3 | 5.7 | 17 |
| Comparative Example 4 | 6.0 | 18 |

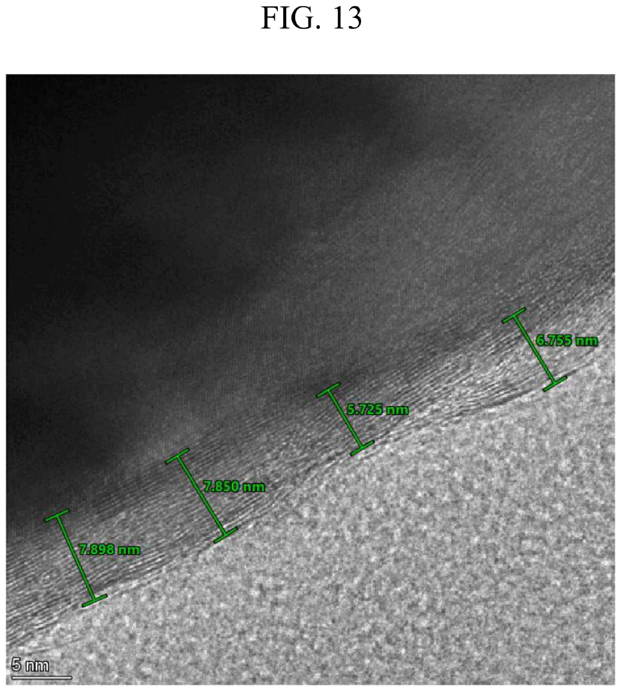

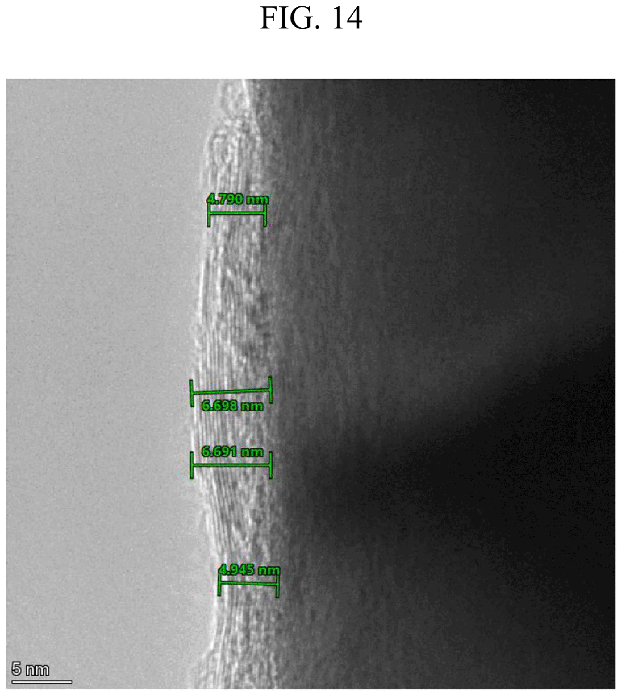

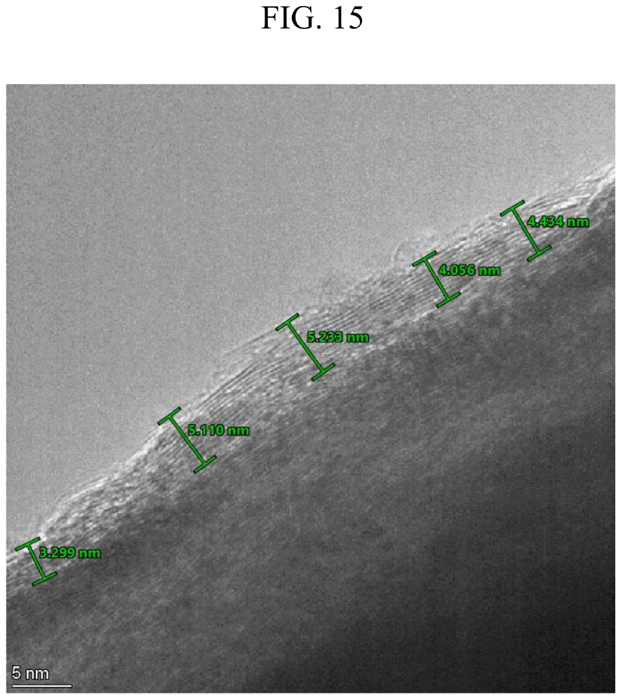

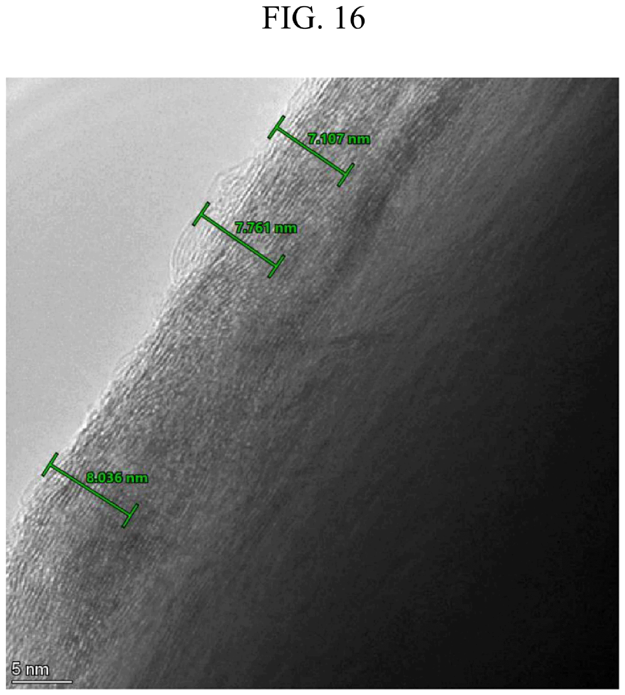

Referring to Table 1, the coating portions of Examples 1 and 2 included graphene with a layered structure from 2 layers to 50 layers (particularly, 20 layers or less), which confirmed that the coating portions including this graphene and the lithium ion conductive solid electrolyte satisfied a thickness from about 1 nm to about 500 nm (or about 10 nm or less). Referring to FIGS. 12 to 16, Example 1 of FIG. 12 and Example 2 of FIG. 13 were confirmed to have coating portions with substantially uniform thickness. On the other hand, Comparative Example 1 of FIG. 14, Comparative Example 3 of FIG. 15, and Comparative Example 4 of FIG. 16 were confirmed to have coating portions with a relatively lesser uniform thickness than those of Examples 1 and 2.

### Evaluation Example 2: Evaluation of Resistance

### (1) Evaluation of Powder Resistance

The powder resistance of the positive electrode active materials of Examples 1 and 2 and Comparative Examples 1 to 4 were measured by controlling the pressure applied to the powder using a powder resistance meter equipped with a 4-pin probe (e.g., a meter with the product name "RM3543" by the manufacturer Hioki E.E. Corp.), and the results are shown in Table 2, below.

### (2) Evaluation of Interfacial Resistance

The rechargeable lithium battery coin half-cells of Examples 1 and 2 and Comparative Examples 1 to 4 were measured with respect to resistance formed on the electrode interface by using an electrochemical impedance analyzer (Electrochemical Impedance Spectroscopy [EIS]). An amplitude was set at ±10 mV, and a frequency was set within a range of 10 mHz to 1 MHz. The cells were charged to a maximum voltage of 4.25 V with reference to a Li negative electrode at a constant current of 0.1 C-rate and cut off at a current of 0.05 C-rate, while maintaining the constant voltage of 4.25 V, and then the cells were allowed to stand for 1 hour to measure the resistance. Subsequently, the resistance was measured at an equilibrium voltage according to a 2-probe method by using an impedance analyzer. The results are shown in Table 2, which show that the battery cells exhibited a lesser interfacial resistance, an easier intercalation and deintercalation of lithium ions during charge and discharge, and a more constant charge and discharge efficiency. Accordingly, the battery cells exhibited improved cycle-life characteristics.

### Evaluation Example 3: Performance Evaluation of Rechargeable Lithium Battery Cell

### (1) Evaluation of Initial Charge/discharge Capacity and Efficiency

The rechargeable lithium battery coin half-cells of Examples 1 and 2 and Comparative Examples 1 to 4 were evaluated with respect to initial charge/discharge capacity and efficiency as follows.

The cells were charged to an upper limit voltage of 4.45 V at a constant current of 0.2 C-rate and at the constant voltage to 0.05 C-rate, and then the cells were discharged to a cut-off voltage of 3.0 V at the 0.2 C-rate at room temperature (25°C) for initial charge and discharge. The efficiency was calculated according to Equation 1, and the results are shown in Table 2. Equation 1 is as follows: [Equation 1] $Efficiency \left[%\right] = \left[Initial discharge capacity/Initial charge capacity\right] \times 100 .$

### (2) Evaluation of High-temperature Cycle-life

The rechargeable lithium battery coin half-cells of Examples 1 and 2 and Comparative Examples 1 to 4 were evaluated with respect to high-temperature cycle-life.

After the initial charge and discharge, the cells were 50 times repeatedly charged and discharged at 1.0 C-rate within a voltage range of 3.0 V to 4.45 V at 45°C. Herein, the high-temperature cycle-life was calculated according to Equation 2, and the results are shown in Table 2. Equation 2 is as follows: [Equation 2] $High - temperature cycle - life \left[%\right] = \left[\begin{matrix}Discharge capacity at {50}^{th} cycle / Discharge capacity \\ at {1}^{st} cycle\end{matrix}\right] \times 100 .$

**Table 2:**

| | Resistance evaluation | | Performance evaluation of rechargeable lithium battery cells | | | |
|---|---|---|---|---|---|---|
| | Powder resistance (Ω·cm) | Interfacial resistance (Ω) | Initial charge capacity (mAh/g) | Initial discharge capacity (mAh/g) | Initial charge/ discharge efficiency (%) | High-temperature cycle-life evaluation (%) |
| Example 1 | 90 | 100 | 243 | 213 | 88 | 92 |
| Example 2 | 90 | 110 | 240 | 212 | 88 | 94 |
| Comparative Example 1 | 85 | 150 | 235 | 208 | 89 | 90 |
| Comparative Example 2 | 150 | 90 | 240 | 208 | 87 | 88 |
| Comparative Example 3 | 250 | 30 | 241 | 205 | 85 | 85 |
| Comparative Example 4 | 160 | 100 | 240 | 205 | 85 | 90 |

Referring to Table 2, the positive electrode active materials of Examples 1 and 2 were confirmed to simultaneously satisfy a powder resistance greater than about 85 Ω·cm and less than about 150 Ω·cm and greater than or equal to about 50 Ω and less than about 150 Ω. In contrast, the positive electrode active materials of Comparative Examples 1 to 4 were confirmed not to satisfy at least one of a powder resistance greater than about 85 Ω·cm and less than about 150 Ω·cm and greater than or equal to about 50 Ω and less than about 150 Ω.

In addition, the rechargeable lithium battery cells of Examples 1 and 2, compared to the rechargeable lithium battery cells of Comparative Examples 1 to 4, exhibited initial charge capacity and initial charge/discharge efficiency that were equivalent to or similar to those of the Comparative Examples or better, while exhibiting significantly improved initial discharge capacity and improved cycle-life characteristics at high temperatures.

While some embodiments have been described above, the present disclosure is not limited to the above-described embodiments. Rather, the present disclosure is also intended to cover various modifications and equivalent arrangements to the above-described embodiments.

### <Description of Representative Reference Numerals>

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealer | 70: | electrode tab |
| 71: | positive electrode tab | 72: | negative electrode tab |

## Claims

1. A positive electrode active material comprising:
a core in a form of secondary particles comprising:
a lithium nickel-based composite oxide; and
a plurality of primary particles that are agglomerated to one another; and a coating portion disposed on a surface of the core comprising:
graphene having a layered structure; and
a lithium ion conductive solid electrolyte.

2. The positive electrode active material as claimed in claim 1, wherein the layered structure comprises from 2 layers to 50 layers.

3. The positive electrode active material as claimed in claim 1 or 2, wherein the graphene of the coating portion is derived from graphite particulates having an average size of less than or equal to 2.5 µm, and wherein preferably
the graphite particulates have a ratio I_{D}/I_{G}, which is a peak intensity I_{D} at 1350 cm⁻¹ to a peak intensity I_{G} at 1580 cm⁻¹ in a Raman spectrum, ranging from 0.15 to 0.50.

4. The positive electrode active material as claimed in any one of claims 1 to 3, wherein the lithium ion conductive solid electrolyte is represented by the following Formula 1:
Li₁₊ₓ₁Rₓ₁M₂₋ₓ₁(PO₄)₃,
wherein R is a metal of Al, B, Sn, Ge, or a combination thereof,
wherein M is Ti, Zr, Hf, or a combination thereof, and
wherein 0≤x1 <2.

5. The positive electrode active material as claimed in any one of claims 1 to 4, wherein the lithium ion conductive solid electrolyte is in a form of particles, and
wherein an average particle diameter D₅₀ of the particles of the lithium ion conductive solid electrolyte is from 1 nm to 1 µm.

6. The positive electrode active material as claimed in any one of claims 1 to 5, wherein the positive electrode active material comprises the graphene in an amount from 0.01 wt% to 5 wt% based on a total weight of the positive electrode active material; and/or an amount of the lithium ion conductive solid electrolyte is from 0.05 wt% to 6 wt% based on a total weight of the positive electrode active material.

7. The positive electrode active material as claimed in any one of claims 1 to 6, wherein a thickness of the coating portion is from 1 nm to 500 nm.

8. The positive electrode active material as claimed in any one of claims 1 to 7, wherein the coating portion comprises:
a first coating portion comprising the graphene; and
a second coating portion comprising the lithium ion conductive solid electrolyte,
wherein the first coating portion is in a form of a coating layer that continuously surrounds the surface of the core, and
wherein the second coating portion has an island geometry that is discontinuous on the surface of the core.

9. The positive electrode active material as claimed in any one of claims 1 to 8, wherein the positive electrode active material further comprises a grain boundary coating portion on surfaces of the primary particles, the grain boundary coating portion comprising the lithium ion conductive solid electrolyte.

10. The positive electrode active material as claimed in any one of claims 1 to 9, wherein the lithium nickel-based composite oxide is represented by the following Formula 3:
Liₐ₃Niₓ₃M³_{y3}M⁴_{z3}O_{2-b3}X_{b3},
wherein 0.9≤a3≤1.2, 0.8≤x3<1, 0<y3≤0.2, 0≤z3≤0.2, 0.9<x3+y3+z3<1.1, and 0≤b3≤0.1,
wherein M³ and M⁴ are each independently, Al, B, Ba, Ca, Ce, Co, Cr, Cu, Fe, Mg, Mn, Mo, Nb, Si, Sn, Sr, Ti, V, W, Y, Zn, Zr, or a combination thereof, and
wherein X is F, P, S, or a combination thereof.

11. The positive electrode active material as claimed in any one of claims 1 to 10, wherein a nickel content of the lithium nickel-based composite oxide is greater than or equal to 80 mol% based on 100 mol% of a total metal in the lithium nickel-based composite oxide, excluding lithium.

12. The positive electrode active material as claimed in any one of claims 1 to 11, wherein an average particle diameter D₅₀ of the core is from 8 µm to 20 µm.

13. The positive electrode active material as claimed in any one of claims 1 to 12, wherein a powder resistance of the positive electrode active material is greater than 85 Ω·cm and less than 150 Ω·cm.

14. A positive electrode comprising:
a positive electrode current collector; and
a positive electrode active material layer on the positive electrode current collector and comprising the positive electrode active material as claimed in any one of claims 1 to 13, and wherein preferably an interfacial resistance of the positive electrode is greater than or equal to 50 Ω and less than 150 Ω.

15. A rechargeable lithium battery comprising:
the positive electrode as claimed in claim 14;
a negative electrode; and
an electrolyte.
